# EUROPEAN PATENT SPECIFICATION

(11) **EP 1 229 223 B1**
(45) Date of publication and mention of the grant of the patent: **21.04.2004**
(21) Application number: 02002551.6
(22) Date of filing: 04.02.2002
(51) Int. Cl.: F01N 9/00, F01N 11/00, F01N 3/023

(54) **Engine exhaust emission purification device**
Abgasreinigungsanlage für eine Brennkraftmaschine
Dispositif d'épuration de gas d'échappement pour un moteur à combustion interne

(30) Priority: 05.02.2001 JP 2001028238; 11.01.2002 JP 2002004427
(43) Date of publication of application: 07.08.2002
(73) Proprietor: Nissan Motor Co., Ltd., Yokohama-shi, Kanagawa (JP)
(72) Inventor: Tsutsumoto, Naoya, Yokohama-shi, Kanagawa (JP)
(74) Representative: Grünecker, Kinkeldey, Stockmair & Schwanhäusser Anwaltssozietät

(56) References cited:
- EP-A- 1 103 702
- FR-A- 2 774 421
- JP-A- 7 310 524
- JP-A- 11 153 020
- US-A- 5 287 698
- US-A- 5 826 425
- US-A1- 2001 010 152

## Description

The present invention relates to an exhaust emission purification device according to the preamble portion of claim 1.

Such an exhaust emission purification device is known from prior art document US 5,287,698.

In order to process the exhaust gas particulate discharged from a diesel engine JP-A 7-11935 proposes disposing a filter in an exhaust system.In this case, if the particulate collection amount (mainly carbon particles) in the filter increases, the resistance of the passage will increase and the exhaust gas pressure loss of the engine will increase.

Thus, when the collection amount of the particulate in the filter reaches a predetermined amount, the filter temperature is raised by a heater to burn the collected particulate and regenerate the filter.The regeneration time is determined based on the exhaust gas differential pressure upstream and downstream of the filter, and when the differential pressure exceeds a set value, it is determined that it is time to regenerate the filter.

When engine oil burns, oil ash is produced although in very small amount. If the oil ash included in the exhaust gas deposits on the filter, even if not much particulates have actually collected on the filter, the above-mentioned differential pressure will become large. Oil ash cannot be burnt like particulates, and its deposition amount increases gradually with the elapsed running time. For this reason, if deposited oil ash on the filter is ignored, the determination of filter regeneration time will be incorrect.heat energy is required to raise the temperature during filter regeneration, but if unnecessary regeneration operations are repeated, fuel cost-performance will be impaired.

It is therefore an objective of the present invention to provide an engine exhaust purification device as indicated above being capable of correctly determining the regeneration time of a filter, appropriately performing exhaust gas purification and reducing the loss of fuel cost-performance as far as possible.

This objective is solved by an engine purification device for a vehicle having the features of claim 1.

Further preferred embodiments are laid down in the dependent claims.

In the following, the present invention is explained in greater detail with respect to several embodiments thereof in conjunction with the accompanying drawings, wherein:

### BRIEF DESCRIPTION OF THE DRAWINGS

Fig. 1 is a schematic block diagram showing one embodiment.
Fig. 2 is a flowchart describing the control of such an embodiment; Fig. 2(A) is a main routine and Fig. 2(B) is a subroutine.
Fig. 3 shows the characteristics of exhaust gas flow rate based on engine load and engine rotation speed; Fig. 3(A) is a natural intake engine, and Fig. 3(B) is a turbo charged engine.
Fig. 4 is a descriptive drawing showing regeneration starting and stopping characteristics.
Fig. 5 is a diagram showing the characteristics of correction values for regeneration starting and stopping determination values based on running distance.
Fig. 6 is a diagram showing oil ash deposition amount and filter pressure loss characteristics based on running distance.
Fig. 7 is a diagram showing particulate collection amount and filter pressure loss characteristics, by comparing an initial state with the state after deposition of oil ash.
Fig. 8 is a diagram showing filter pressure loss variation characteristics due to a filter regeneration operation.
Fig. 9 is a diagram showing particulate collection amount and combustion rate characteristics during filter regeneration.
Fig. 10 is a diagram showing the characteristics of correction values of regeneration starting and stopping determination values based on the filter inlet and outlet temperature.
Fig. 11 is a diagram showing filter inlet and outlet temperature characteristics due to regeneration.
Fig. 12 is a diagram showing the characteristics of correction values of regeneration starting and stopping determination values based on regeneration time.
Fig. 13 is a characteristic diagram showing the particulate discharge amount based on the engine rotation speed and load.
Fig. 14 is a diagram showing the characteristics of correction values of regeneration starting and stopping determination values based on the particulate collection amount.

An embodiment will now be described referring to the drawings.

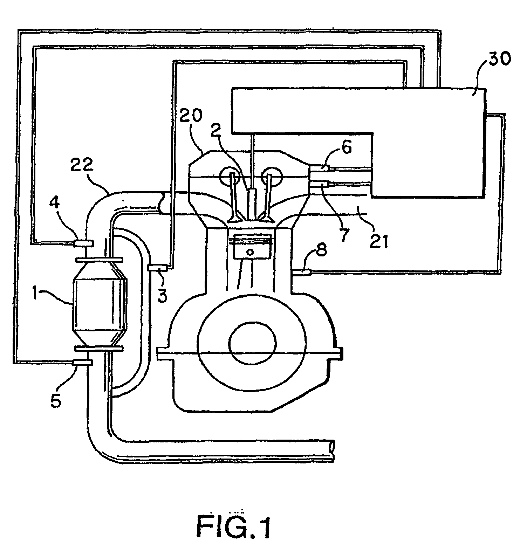

First, in Fig. 1, 20 shows a diesel engine which has an intake passage 21 and an exhaust passage 22.

A filter 1 which collects particulates in the exhaust is installed in the exhaust passage 22.

A controller 30 is provided which regenerates the filter 1 when the particulate collection amount of the filter 1 reaches a predetermined value.

The controller 30 comprises a microprocessor, memory and input/output interface.

A differential pressure sensor 3 is installed in a differential pressure detection passage which bypasses the filter 1 in order to detect the exhaust gas differential pressure upstream and downstream of the filter 1, and temperature sensors 4, 5 are installed to detect the inlet and outlet temperatures of the filter 1, respectively.

An engine rotation speed sensor 6 and engine load sensor 7 are provided to detect the engine exhaust gas flow rate, and a running distance sensor 8 is provided to detect the running distance of the vehicle.The outputs of these sensors are sent to the controller 30. Based thereon, the particulate collection amount of the filter 1 is determined and regeneration of the filter 1 is performed with a predetermined timing, as described later.

The regeneration of the filter 1 is performed by raising the exhaust gas temperature, by delaying the fuel injection timing of the fuel injected from the fuel injector (for example, common-rail fuel injector) 2 of the diesel engine 20 compared to the fuel injection timing during ordinary running, or by performing an additional injection once after the ordinary injection.

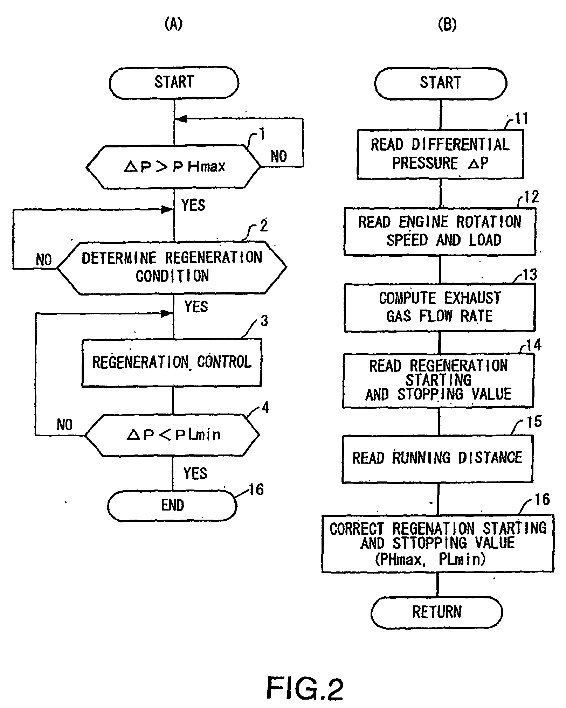

Fig. 2 is a flowchart for performing regeneration in the controller 30; (A) shows the main routine, (B) shows a subroutine. These are repeatedly performed at a predetermined interval.

The regeneration of the filter 1 will be described according to this flowchart.

First, the subroutine (B) for correction of the regeneration determination value will be described.

In a step S11, a differential pressure 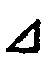 P upstream and downstream of the filter 1 is read from the output of the differential pressure sensor 3, and in a step S12, the engine rotation speed and load are read from the output of the rotation speed sensor 6 and the load sensor 7.

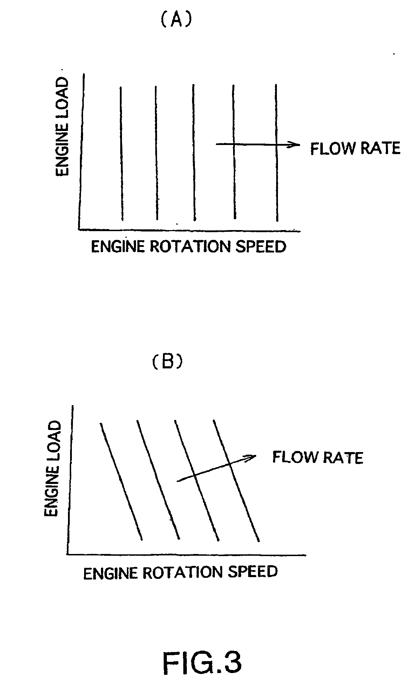

In a step S13, the exhaust gas flow rate is computed according to the map of Fig. 3 based on the engine rotation speed and load.Fig. 3(A) shows the characteristics of a natural intake engine, and Fig. 3(B) shows the characteristics of an engine with a turbocharger.

The differential pressure upstream and downstream of the filter 1 increases as the particulate collection amount increases, but it fluctuates according to the exhaust gas flow rate at that time, and for an identical collection amount, the differential pressure becomes larger the higher the exhaust gas flow rate becomes.

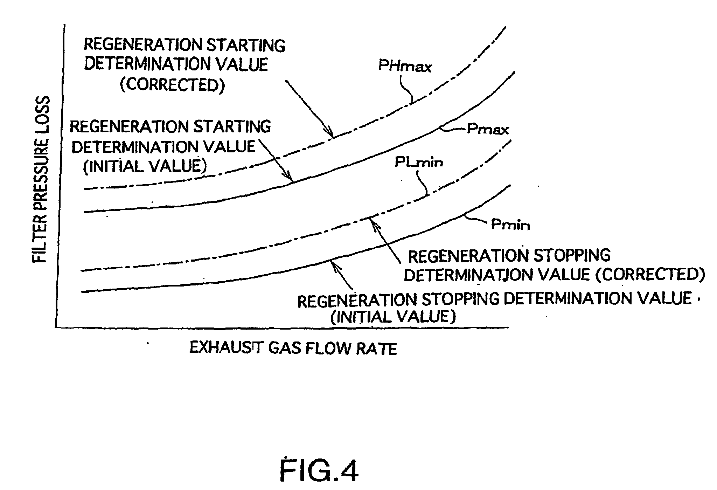

In a step S14, a regeneration starting determination value which is a pressure value when regeneration starts, and a regeneration stopping value which is a pressure value when regeneration stops, are read from a table as shown in Fig. 4 which sets the regeneration determination values based on the amount of exhaust gas flow rate at that time.

The regeneration determination value is set as a value equivalent to a pressure value when the particulate collection amount reaches a predetermined value.

The filter pressure loss at regeneration starting, i.e., the upstream/downstream differential pressure, is large, and by comparison, the differential pressure at regeneration stopping after particulate combustion falls. Therefore, the regeneration determination values are set correspondingly.

The regeneration starting determination value and regeneration stopping determination value become larger as the exhaust gas flow rate increases.Next, in a step S15, the running distance of the vehicle is read from the output of the running distance sensor 8, and in a step S16, based on this running distance, the regeneration starting determination value and regeneration stopping determination value are corrected.

If oil ash generated by combustion of engine oil is contained in the exhaust and this oil ash deposits on the filter 1, the differential pressure upstream and downstream of the filter 1 will increase according to the oil ash deposition amount. The oil ash does not burn when the filter is regenerated. For this reason, the oil ash deposition amount increases the longer the engine running time.

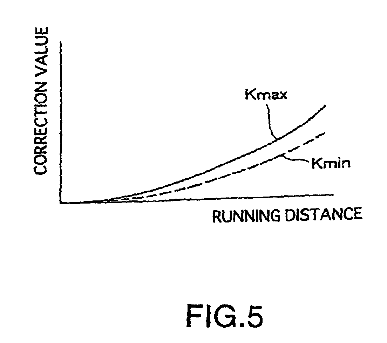

Thus, it will be considered that, by correcting the aforesaid determination values according to the oil ash deposition amount using the correction values, **Kmax, Kmin** set by a table as shown in Fig. 5, these corrected determination values depend on the actual particulate collection amount collected in the filter 1. A regeneration starting determination value **PHmax** is calculated as a basic value (initial value) **Pmax+** correction value **Kmax,** and the regeneration stopping determination value **PLmin** is likewise calculated as a basic value (initial value) **Pmin+Kmin.** However, it is also possible to compute the regeneration determination values by multiplying the basic values by correction values.

As the oil ash deposition amount increases according to the running distance of the vehicle, the correction values **Kmax, Kmin** are both values which increase according to the running distance. The regeneration starting determination value and regeneration stopping determination value after this correction are shown by the dot-and-dash line of Fig. 4, and they are both large values compared with the values before correction.

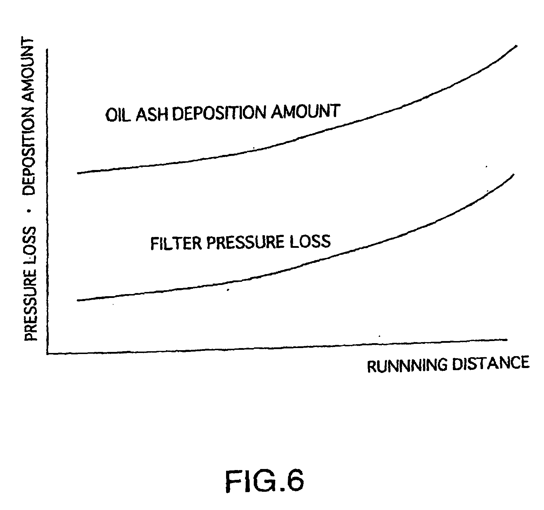

As shown in Fig. 6, the amount of oil ash deposited on the filter 1 increases according to the running distance of the vehicle, so the filter 1 gradually becomes clogged and filter pressure loss increases.

Thus, the filter suffers pressure loss due to collected particulates and also due to deposition of oil ash, so by adding the pressure loss due to this oil ash to the pressure value for determining regeneration starting and stopping, determination correction values depending on the particulate collection amount can be precisely computed.

Next, regeneration control of the filter will be described according to the main routine of Fig. 2(A). This control is performed while reading the execution result of the above-mentioned subroutine.

In a step S1, the magnitudes of the differential pressure 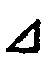 **P** upstream and downstream of the filter 1 and the regeneration starting determination value **PHmax** are compared, and the regeneration starting time is determined. When the differential pressure 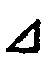 P is larger than the determination value PHmax, it is determined that it is time for the filter to be regenerated, otherwise, the routine returns to its original state.

When the pressure loss of the filter 1 increases and it is determined that regeneration has started, the routine proceeds to a step S2 and it is determined whether or not the present running condition satisfies regeneration conditions. When regeneration conditions are satisfied, such as when the engine is running in the steady state, the routine shifts to regeneration control in a step S3. When the regeneration conditions are not satisfied, the system waits for a running state when the regeneration conditions are satisfied.

In the regeneration control of the step S3, the fuel injection timing of the fuel injected from the fuel injector 2 is relatively delayed, or the combustion in the engine is delayed from the regular state by injecting once again after the injection with the usual fuel injection timing, so as to raise the exhaust gas temperature, and the particulates collected by the filter 1 are thereby burned.

In a step S4, the differential pressure 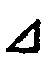 **P** upstream and downstream of the filter 1 is compared with the regeneration stopping determination value **PLmin,** and regeneration control is continued until the differential pressure 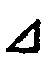 **P** becomes less than the regeneration stopping determination value **PLmin.** When, due to combustion of particulates, the differential pressure upstream and downstream of the filter 1 falls to less than the regeneration stopping determination value PLmin, it is determined that the regeneration stopping time has been reached, and regeneration control is stopped.

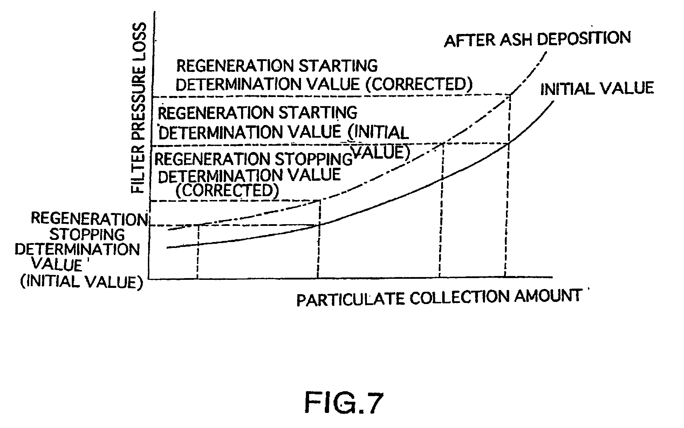

Next, the overall operation will be described referring to Fig. 7-Fig. 9.

The particulate contained in the exhaust from the engine are collected on the filter 1, and their discharge to the outside atmosphere is prevented. As the particulate collection amount increases, the filter 1 becomes clogged, and the upstream/downstream differential pressure gradually becomes large.

When the differential pressure becomes large, exhaust gas pressure loss will increase and the performance of the engine will be impaired. Hence, when the collected particulates exceed a predetermined amount, regeneration of the filter 1 is performed.

The determination of the regeneration time is performed based on a comparison of the regeneration starting pressure based on the exhaust gas flow rate at that time, and the upstream/downstream differential pressure (pressure loss) of the filter 1.

The pressure loss of the filter 1 becomes large the more the particulate (PM) collection amount increases, and this pressure loss increases relatively due to deposition of oil ash, as shown also in Fig. 7. Initially, when the vehicle running distance is small, there is little deposition of oil ash, but when the running distance increases, the oil ash deposition amount will increase. Hence, the amount of oil ash deposited on the filter 1 is estimated according to the running distance, and the regeneration starting determination value and stopping determination value are corrected based on this estimate.

Therefore, these corrected determination values contain an oil ash deposition fraction, and by comparing this with the pressure loss of the filter 1, a precise determination of regeneration starting time and regeneration stopping time reflecting the actual particulate collection amount can be made.

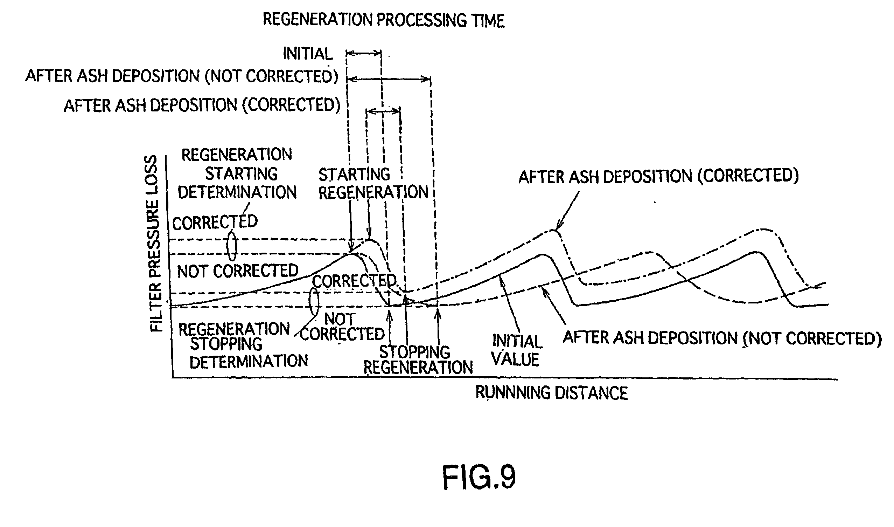

Fig. 9 shows the regeneration of the filter 1, and the resulting pressure loss state of the filter 2, when the regeneration determination values have been corrected relative to the oil deposition amount on the filter 1 (dot-and-dash line in the figure), and when the regeneration determination values have not been corrected relative to the oil deposition amount on the filter 1 (dotted line in the figure).

As seen from this figure, in the filter initial state shown by the solid line in the figure, the determination value (differential pressure) for filter regeneration starting and the determination value for regeneration stopping are low, whereas, the determination values are relatively higher due to correction after oil ash deposition.

Therefore, regeneration starting and stopping correspond precisely to the actual particulate collection amount of the filter 1, and for this reason, the regeneration time is effectively set.On the other hand, if correction is not performed despite the deposition of oil ash, even if the actual particulate amount does not reach the amount at which regeneration is necessary, as there is a pressure loss due to the deposition of oil ash, the differential pressure upstream and downstream of the filter 1 rapidly attains the regeneration starting determination value.

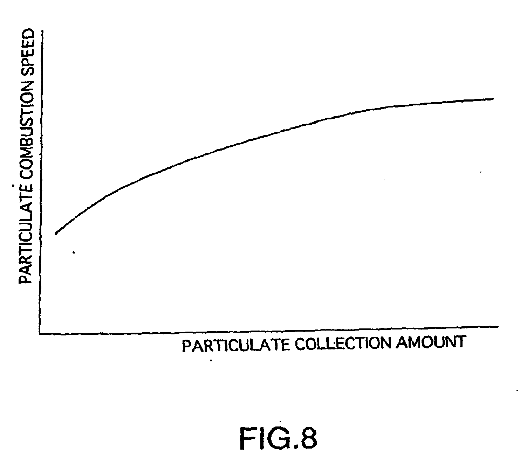

In this case, the particulate collection amount decreases to less than in the steady state. As shown in Fig. 8, the combustion rate varies due to the particulate collection amount, and the combustion rate decreases, the less the collection amount becomes. Hence, the time required for regeneration increases, and the fuel-cost performance deteriorates by a corresponding amount.That is, if the combustion rate falls, particulates do not burn easily, and it takes time for the differential pressure of the filter 1 to fall to the regeneration stopping determination value.

However, according to the teaching of the present embodiments, by estimating the oil ash deposition amount and applying a correction, the particulate collection amount can be determined correctly, the regeneration time is always accurately, and deterioration of fuel cost-performance is suppressed.

Next, another embodiment will be described. In this embodiment, the technique of estimating the oil ash deposition amount of the filter 1 is different.

In the preceding embodiment, the oil ash deposition amount was estimated based on the running distance of the vehicle, and the regeneration starting and stopping determination values were corrected accordingly, but in this embodiment, the following processing is performed.

When the oil ash deposition amount increases, the particulate collection amount when the differential pressure upstream and downstream of the filter 1 is the same will relatively decrease.

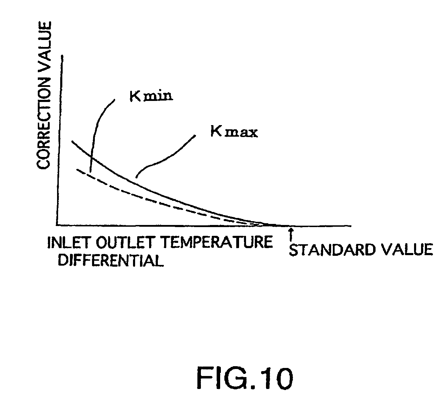

In this case, regeneration is performed when the filter differential pressure reaches a predetermined regeneration starting determination value, and even if regeneration is stopped when it has fallen to the regeneration stopping determination value, the processing time required for regeneration increases by the amount the actual particulate collection amount has decreased, and the temperature difference (outlet temperature - inlet temperature) between the inlet temperature and the outlet temperature of the filter 1 during regeneration becomes small. Thus, the output of the temperature sensor 4 at the inlet of the filter 1 and the output of the temperature sensor 5 at the outlet of the filter 1 during regeneration are compared, and the regeneration starting and regeneration stopping determination values are corrected using the correction values **Kmax, Kmin** as shown in Fig. 10.

Even if the differential pressure of the filter 1 is the same, the actual particulate collection amount decreases, i.e., the oil ash deposition amount increases, the less the temperature difference between the inlet temperature and outlet temperature of the filter 1. Therefore, the regeneration starting and regeneration stopping determination values are both corrected so that they are higher.

Even if the oil ash deposition amount increases with time, the particulates which are actually collected can be increased to a predetermined set amount by increasing the regeneration determination values.

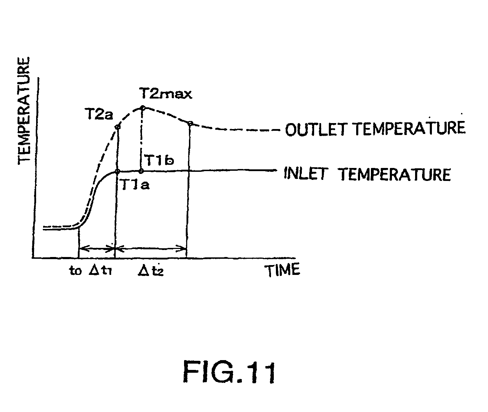

Fig. 11 shows the characteristics of the exhaust gas temperature at the inlet and outlet of the filter 1 when regeneration is performed. Regeneration starts at a time **t0,** the exhaust gas temperature at the inlet rises as shown by the solid line during the period 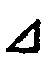 **t1,** and subsequently, a constant temperature is maintained during regeneration. On the other hand, as the particulates collected by the filter 1 burn, the exhaust gas temperature at the outlet shown by the dotted line becomes higher than the temperature at the inlet.

The temperature rise at the outlet side is slightly slower than the temperature rise at the inlet side, and after it eventually reaches a maximum temperature, the temperature starts to drop. During regeneration when the particulates are burning, the outlet temperature remains higher than the inlet temperature.

The difference between the inlet temperature and outlet temperature corresponding to the particulate combustion amount may for example be computed as the average temperature difference during the interval 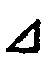 **t1,** computed as a temperature difference of the inlet temperature **T1b** when the outlet has reached a maximum temperature **T2max,** or calculated as a temperature difference between an outlet temperature **T2a** and an inlet temperature **T1a** at a point **(t0 +** 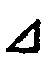 **t1)** when a fixed time has elapsed from the start of regeneration.

A correction based on the temperature difference between the inlet and outlet may be performed instead of the correction of the regeneration starting determination value and regeneration stopping determination value based on the running distance by reading the vehicle running distance, which is performed in the steps S15, S16 of the flowchart of Fig. 2(B). The temperature difference at the filter inlet and outlet when regeneration is performed on the immediately preceding occasion is stored, and the regeneration starting and stopping determination values are corrected based thereon. The correction values are data obtained when the regeneration processing was performed on the immediately preceding occasion, but this approximates the latest situation and presents no problem in practice.

When the temperature difference at the filter inlet and outlet becomes small, the regeneration starting and stopping pressure determination values are respectively corrected so that they are increased. As a result, the pressure loss correction due to the effect of oil ash deposition is excluded, the regeneration determination values correspond to the particulate collection amount, and regeneration processing is always performed when the predetermined amount of particulates have collected. In this way, the time required for regeneration processing does not needlessly increase, and impairment of fuel cost-performance is suppressed as in the previous embodiment.

In this case, the filter 1 may be a catalyst support type.

Describing now a further embodiment, the oil ash deposition amount is estimated depending on the regeneration time of the filter 1, and the regeneration starting determination value and regeneration stopping determination value are respectively corrected thereby.

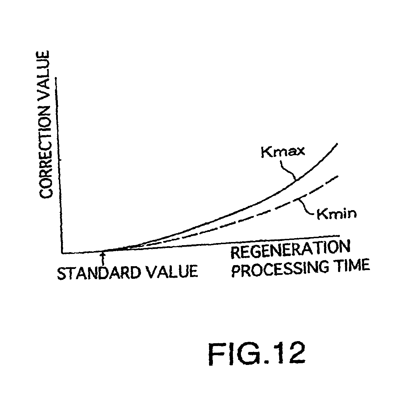

When the oil ash deposition amount increases, the particulate collection amount when the differential pressure of the filter reaches the regeneration starting determination value relatively decreases, the particulate combustion rate decreases and the processing time required for regeneration becomes longer. Hence, the regeneration starting and stopping determination values are respectively corrected to become higher according to the regeneration processing time using the correction values **Kmax, Kmin** shown in Fig. 12.

The regeneration processing time is the time required from when regeneration starts to when it is determined that regeneration has stopped. This correction is also performed by the steps S 15, S 16 of the flowchart of Fig. 2(B). In this case, the regeneration starting and stopping determination values are corrected using the correction values based on the regeneration processing time on the immediately preceding occasion. In this way, oil ash deposition is excluded, and the regeneration of the filter 1 corresponds precisely to the particulate collection amount.

Describing now yet another embodiment, when the oil ash deposition amount increases, the particulate collection amount for the same differential pressure of the filter 1 decreases, so the particulate collection amount until regeneration processing is predicted from the running history to predict the regeneration starting and stopping determination values.

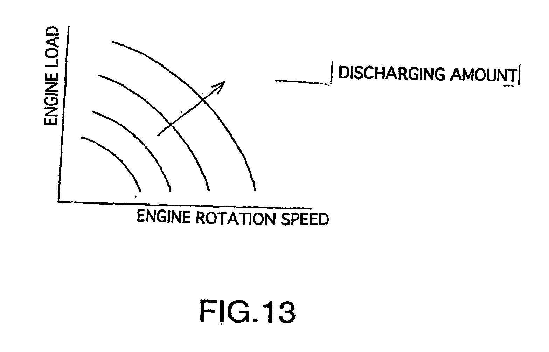

When the oil ash deposition amount increases, the particulate collection amount for the same pressure loss of the filter 1 decreases compared to the case when oil ash does not deposit. The particulate collection amount varies according to the running history of the engine, i.e., the engine rotation speed/load history. Fig. 13 shows the particulate discharge amount based on the engine rotation speed and load.

Therefore, by calculating the integral value of the particulate discharge amount per unit time until the next regeneration processing, the particulate collection amount can be estimated.

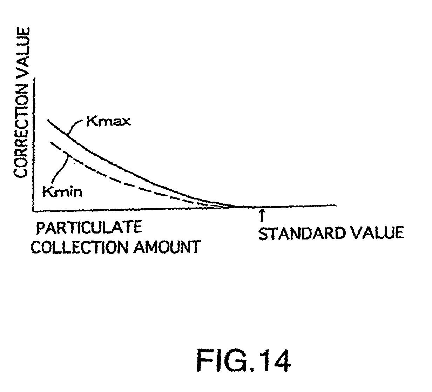

When the differential pressure reaches the regeneration determination value, if the particulate collection amount calculated from the running history is small, it means that the oil ash deposition amount is large. Hence, the regeneration starting and stopping determination values are corrected by the correction values **Kmax, Kmin** according to the particulate collection amount as shown in Fig. 14. In this case also, the regeneration starting and stopping determination amounts are corrected by correction values related to the particulate collection amount instead of the correction performed in the steps S 15, S16 of the flowchart of Fig. 2.

As a result, by increasing the regeneration determination values the more the particulate collection amount decreases and the higher the estimated value of the oil ash deposition amount, the particulate collection amount up to next regeneration can be made to converge to a precise predetermined value.

In the above description, the pressure loss of the filter 1 was detected by a differential pressure sensor, but if the pressure fluctuation downstream of the filter is small, the pressure loss may also be estimated by detecting only the upstream exhaust gas pressure. It is also possible to detect both upstream and downstream exhaust gas pressure to estimate the pressure loss of the filter 1.

The above description primarily provides an engine exhaust purification device for a vehicle engine having a filter which collects particulate in an exhaust passage. The device comprises a sensor which detects a differential pressure upstream and downstream of the filter, a sensor which detects an exhaust gas flow rate, a device which raises the exhaust gas temperature upstream of the filter, and a controller which functions to: estimate an oil ash deposition amount on the filter, set a regeneration determination value which performs regeneration of the filter based on the oil ash deposition amount and exhaust gas flow rate, and increase the exhaust gas temperature upstream of the filter to perform regeneration of the filter when it is determined that it is time to regenerate the filter by comparing the detected differential pressure and the regeneration determination value.

## Claims

1. Engine exhaust purification device for a vehicle having a filter (1) collecting particulates in an exhaust passage (22) comprising:
a sensor (3) for detecting a differential pressure (ΔP) upstream and downstream of the filter (1), a device for raising an exhaust gas temperature (T1a) upstream of the filter (1), and a controller (30) adapted to estimate an oil ash deposition amount on the filter (1) and to increase the exhaust gas temperature (T1a) upstream of the filter (1) to perform a regeneration of the filter (1),
**characterized In that**
the controller (30) is further adapted to determine an exhaust gas flow rate in conjunction with a sensor arrangement (6,7), and to compute a corrected pressure value (PHmax) determining the start of the filter regeneration based on the oil ash deposition amount and the exhaust gas flow rate, wherein it is determined that it is time to regenerate the filter (1) by comparing the detected differential pressure (ΔP) with the corrected pressure value (PHmax) determining the start of the filter regeneration.

2. Engine exhaust purification device according to claim 1, **characterized by** a regeneration determination value comprising a regeneration starting determination value (PHmax) and a regeneration stopping determination value (PLmin), wherein the controller is adapted to start regeneration when the differential pressure (ΔP) reaches the regeneration starting determination value (PHmax), and to stop regeneration when the differential pressure (ΔP) decreases to the regeneration stopping determination value (PLmin).

3. Engine exhaust purification device according to claim 2, **characterized in that** the regeneration determination value is set to increase the larger the exhaust flow rate becomes.

4. Engine exhaust purification device according to one of the preceding claims 1 to 3, **characterized in that** the exhaust gas flow rate is estimated based on an engine rotation speed and an engine load.

5. Engine exhaust purification device according to at least one of the claims 2 to 4, **characterized in that** the regeneration determination value is set to increase the larger the oil ash deposition amount becomes.

6. Engine exhaust purification device according to at least one of the preceding claims 1 to 5, **characterized in that** the oil ash deposition amount is estimated based on the vehicle running distance.

7. Engine exhaust purification device according to at least one of the preceding claims 1 to 5, **characterized in that** the oil ash deposition amount is estimated based on the engine running history.

8. Engine exhaust purification device according to claim 7, **characterized in that** the engine running history is estimated based on the engine rotation speed and load history.

9. Engine exhaust purification device according to at least one of the preceding claims 1 to 5 **characterized by** further sensors adapted to detect an exhaust gas temperature upstream and downstream of the filter (4,5), wherein the oil ash deposition amount is estimated based on the upstream and downstream exhaust gas temperature.

10. Engine exhaust purification device according to at least one of the preceding claims 1 to 5, **characterized by** means for measuring a regeneration processing time of the filter, wherein the oil ash deposition amount is estimated based on the filter regeneration processing time.

11. Engine exhaust purification device according to at least one of the preceding claims 1 to 10, **characterized by** an exhaust gas temperature raise device adapted to increase the exhaust gas temperature by delaying a fuel injection timing to the engine compared to a fuel injection timing in the normal running state.

12. Engine exhaust purification device according to at least one of the preceding claims 1 to 10, **characterized by** an exhaust gas temperature raise device adapted to increase the exhaust gas temperature by repeating fuel injection after performing a fuel injection to the engine in the normal running state.

13. Engine exhaust purification device according to at least one of the preceding claims 1 to 12, **characterized in that** the differential pressures sensor (3) comprises a pressure sensor disposed upstream of the filter, and the differential pressure is estimated based on the output of this pressure sensor.

## Patentansprüche

1. Motor- Abgasreinigungsvorrichtung für ein Fahrzeug, mit einem Filter (1), der Teilchen in einem Auslasskanal (22) sammelt, mit:
einem Sensor (3) zum Erfassen einer Druckdifferenz (P), stromauf und stromab des Filters (1), einer Vorrichtung zum Anheben einer Abgastemperatur (T1a) stromab des Filters (1), und einer Steuerung (30), vorgesehen eine Ölrückstandsablagerungsmenge an dem Filter (1) einzuschätzen und die Abgastemperatur (T1a) stromauf des Filters (1) zu erhöhen, um eine Regeneration des Filters (1) auszuführen,
**dadurch gekennzeichnet, dass**
die Steuerung (30) außerdem vorgesehen ist, eine Abgasströmungsrate in Verbindung mit einer Sensoranordnung (6, 7) zu bestimmen und einen korrigierten Druckwert (PHmax) zu berechnen, der den Beginn der Filterregeneration auf der Grundlage der Ölrückstandsablagerungsmenge und der Abgasströmungsrate bestimmt, wobei festgestellt wird, dass es dann Zeit ist, den Filter (1) zu regenerieren, indem die erfasste Druckdifferenz ( P) mit dem korrigierten Druckwert (PHmax), der den Beginn der Filterregeneration bestimmt, verglichen wird.

2. Motor- Abgasreinigungsvorrichtung nach Anspruch 1, **gekennzeichnet durch** einen Regenerations- Bestimmungswert mit einem Regenerationsbeginn- Bestimmungswert (PHmax), und einem Regenerationsstopp- Bestimmungswert (PLmin), wobei die Steuerung vorgesehen ist, die Regeneration zu beginnen, wenn der Druckdifferenz (P) den Regenerationsbeginn- Bestimmungswert (PHmax) erreicht, und um die Regeneration zu stoppen, wenn sich die Druckdifferenz (P) auf den Regenerationsstopp- Bestimmungswert (PLmin) vermindert.

3. Motor- Abgasreinigungsvorrichtung nach Anspruch 2, **dadurch gekennzeichnet, dass** der Regenerationsbestimmungswert festgelegt wird, sich zu erhöhen, je größer die Abgasströmungsrate wird.

4. Motor- Abgasreinigungsvorrichtung nach einem der vorhergehenden Ansprüche 1 bis 3, **dadurch gekennzeichnet, dass** die Abgasströmungsrate auf der Grundlage der Motordrehzahl und einer Motorbelastung eingeschätzt wird.

5. Motor- Abgasreinigungsvorrichtung nach zumindest einem der Ansprüche 2 bis 4, **dadurch gekennzeichnet, dass** der Regenerationsbestimmungswert festgelegt wird, sich zu erhöhen, je größer die Ölrückstandsablagerungsmenge wird.

6. Motor- Abgasreinigungsvorrichtung nach zumindest einem der vorhergehenden Ansprüche 1 bis 5, **dadurch gekennzeichnet, dass** die Ölrückstandsablagerungsmenge auf der Grundlage der Fahrzeuglaufstrecke eingeschätzt wird.

7. Motor- Abgasreinigungsvorrichtung nach zumindest einem der vorhergehenden Ansprüche 1 bis 5, **dadurch gekennzeichnet, dass** die Ölrückstandsablagerungsmenge auf der Grundlage der Motorlaufgeschichte eingeschätzt wird.

8. Motor- Abgasreinigungsvorrichtung nach Anspruch 7, **dadurch gekennzeichnet, dass** die Motorlaufgeschichte auf der Grundlage der Motordrehzahl und der Belastungsgeschichte eingeschätzt wird.

9. Motor- Abgasreinigungsvorrichtung nach zumindest einem der vorhergehenden Ansprüche 1 bis 5, **gekennzeichnet durch** weitere Sensoren, vorgesehen eine Abgastemperatur stromauf und stromab des Filters (4, 5) zu erfassen, wobei die Ölrückstandsablagerungsmenge auf der Grundlage der stromaufseitigen und stromabseitigen Auslassgastemperatur eingeschätzt wird.

10. Motor- Abgasreinigungsvorrichtung nach zumindest einem der vorhergehenden Ansprüche 1 bis 5, **gekennzeichnet durch** eine Einrichtung zum Messen einer Regenerationsbehandlungszeit des Filters, wobei die Ölrückstandsablagerungsmenge auf der Grundlage der Filterregenerationsbehandlungszeit eingeschätzt wird.

11. Motor- Abgasreinigungsvorrichtung nach zumindest einem der vorhergehenden Ansprüche 1 bis 10, **gekennzeichnet durch** eine Abgastemperatur- Erhöhungsvorrichtung, vorgesehen um die Abgastemperatur **durch** Verzögern eines Kraftstoffeinspritzzeitpunktes des Motors, verglichen mit einem Kraftstoffeinspritzzeitpunkt in dem Normalzustand, zu erhöhen.

12. Motor- Abgasreinigungsvorrichtung nach zumindest einem der vorhergehenden Ansprüche 1 bis 10, **gekennzeichnet durch** eine Abgastemperaturerhöhungsvorrichtung, vorgesehen um die Abgastemperatur **durch** Wiederholen der Kraftstoffeinspritzung nach dem Ausführen eines Kraftstoffeinspritzung in den Motor in dem Normallaufzustand zu erhöhen.

13. Motor- Abgasreinigungsvorrichtung nach zumindest einem der vorhergehenden Ansprüche 1 bis 12, **dadurch gekennzeichnet, dass** der Druckdifferenzsensor (3) einen Drucksensor aufweist, angeordnet stromauf des Filters, und die Druckdifferenz auf der Grundlage des Ausgangssignals dieses Drucksensors eingeschätzt wird.

## Revendications

1. Dispositif d'épuration des gaz d'échappement pour un moteur de véhicule comprenant un filtre (1) retenant des matières particulaires dans un passage d'échappement (22) comprenant :
- un capteur (3) pour détecter une pression différentielle (ΔP) en amont et en aval du filtre (1), un dispositif pour faire augmenter une température des gaz d'échappement (T1a) en amont du filtre (1) ainsi qu'un dispositif de commande (30) apte à estimer une quantité de dépôt de cendres d'huile sur le filtre (1) et pour augmenter la température des gaz d'échappement (T1a) en amont du filtre (1) pour exécuter une régénération du filtre (1),
**caractérisé en ce que**
le dispositif de commande (30) est conçu en outre pour déterminer un débit d'écoulement des gaz d'échappement conjointement avec un agencement de capteurs (6, 7) et pour calculer une valeur de pression corrigée (PHmax) déterminant le départ de la régénération du filtre sur la base de la quantité de dépôt de cendres d'huile et du débit d'écoulement des gaz d'échappement, où il est déterminé qu'il est temps de régénérer le filtre (1) en comparant la pression différentielle détectée (ΔP) à la valeur de pression corrigée (PHmax) déterminant le départ de la régénération du filtre.

2. Dispositif d'épuration des gaz d'échappement pour un moteur selon la revendication 1, **caractérisé par** une valeur de détermination de régénération comprenant une valeur de détermination de départ de régénération (PHmax) et une valeur de détermination d'arrêt de régénération (PLmin), où le dispositif de commande est apte à démarrer la régénération lorsque la pression différentielle (ΔP) atteint la valeur de détermination de départ de régénération (PHmax), et à arrêter la régénération lorsque la pression différentielle (ΔP) diminue à la valeur de détermination d'arrêt de régénération (PLmin).

3. Dispositif d'épuration des gaz d'échappement pour un moteur selon la revendication 2, **caractérisé en ce que** la valeur de détermination de régénération est réglée pour qu'elle augmente, plus le débit d'écoulement des gaz d'échappement augmente.

4. Dispositif d'épuration des gaz d'échappement pour un moteur selon l'une des revendications précédentes 1 à 3, **caractérisé en ce que** le débit d'écoulement des gaz d'échappement est estimé sur la base d'une vitesse de rotation du moteur et d'une charge du moteur.

5. Dispositif d'épuration des gaz d'échappement selon au moins l'une des revendications 2 à 4, **caractérisé en ce que** la valeur de détermination de régénération est réglée pour qu'elle augmente, plus la quantité de dépôt des cendres d'huile augmente.

6. Dispositif d'épuration des gaz d'échappement pour un moteur selon au moins l'une des revendications précédentes 1 à 5, **caractérisé en ce que** la quantité de dépôt des cendres d'huile est estimée sur la base de la distance de roulement du véhicule.

7. Dispositif d'épuration des gaz d'échappement pour un moteur selon au moins l'une des revendications précédentes 1 à 5, **caractérisé en ce que** la quantité de dépôt des cendres d'huile est estimée sur la base de l'historique de roulement du moteur.

8. Dispositif d'épuration des gaz d'échappement pour un moteur selon la revendication 7, **caractérisé en ce que** l'historique de roulement du moteur est estimée sur la base de la vitesse de rotation du moteur et de l'historique de charge.

9. Dispositif d'épuration des gaz d'échappement pour un moteur selon au moins l'une des revendications précédentes 1 à 5, **caractérisé par** d'autres capteurs conçus pour détecter une température des gaz d'échappement en amont et en aval du filtre (4, 5), où la quantité de dépôt de cendres d'huile est estimée sur la base de la température des gaz d'échappement en amont et en aval.

10. Dispositif d'épuration des gaz d'échappement pour un moteur selon au moins l'une des revendications précédentes 1 à 5, **caractérisé par** des moyens pour mesurer un temps de traitement de régénération du filtre, où la quantité de dépôt des cendres d'huile est estimée sur la base du temps de traitement de régénération du filtre.

11. Dispositif d'épuration des gaz d'échappement pour un moteur selon au moins l'une des revendications précédentes 1 à 10, **caractérisé par** un dispositif d'augmentation de la température des gaz d'échappement conçu pour faire augmenter la température des gaz d'échappement en retardant une commande de l'avance à l'injection du combustible dans le moteur en comparaison à une commande de l'avance à l'injection du combustible à l'état de roulement normal.

12. Dispositif d'épuration des gaz d'échappement pour un moteur selon au moins l'une des revendications précédentes 1 à 10, **caractérisé par** un dispositif d'augmentation de la température des gaz d'échappement apte à faire augmenter la température des gaz d'échappement en répétant l'injection du combustible après avoir exécuté une injection de combustible dans le moteur à l'état de roulement normal.

13. Dispositif d'épuration des gaz d'échappement pour un moteur selon au moins l'une des revendications précédentes 1 à 12, **caractérisé en ce que** le capteur de pression différentielle (3) comprend un capteur de pression disposé en amont du filtre, et la pression différentielle est estimée sur la base de la sortie de ce capteur de pression.
